# EUROPÄISCHE PATENTSCHRIFT

(11) **EP 1 034 059 B1**
(45) Veröffentlichungstag und Bekanntmachung des Hinweises auf die Patenterteilung: **02.06.2004**
(21) Anmeldenummer: 98959881.8
(22) Anmeldetag: 23.11.1998
(51) Int. Cl.: B22D 11/128

(54) **DREHDURCHFÜHRUNG FÜR DIE KÜHLWASSERZU- UND -ABLEITUNG EINER ENDSEITIG MIT LAGERZAPFEN IN LAGERBÖCKEN DREHGELAGERTEN STÜTZ- UND/ODER TRANSPORTROLLE, INSBESONDERE IN EINER STRANGGIESSANLGAGE**
ROTARY TRANSMISSION LEADTHROUGH FOR THE COOLING WATER SUPPLY AND DISCHARGE OF A SUPPORTING AND/OR CONVEYOR ROLL ROTATIVELY MOUNTED ON BEARING BLOCKS BY BEARING PINS ARRANGED AT ITS ENDS, IN PARTICULAR IN A CONTINUOUS CASTING PLANT
PASSAGE TOURNANT POUR L'AMENEE ET L'EVACUATION D'EAU DE REFROIDISSEMENT D'UN ROULEAU D'APPUI ET/OU DE TRANSPORT MONTE DANS DES PALIERS A L'AIDE DE TOURILLONS DISPOSES A SES EXTREMITES, NOTAMMENT DANS UNE INSTALLATION DE COULEE CONTINUE

(30) Priorität: 26.11.1997 DE 19752336
(43) Veröffentlichungstag der Anmeldung: 13.09.2000
(73) Patentinhaber: Thyssen Krupp AG, 40211 Düsseldorf (DE)
(72) Erfinder: SCHULZ GEN. MENNINGMANN, Hans-Jürgen, D-46539 Dinslaken (DE); GREWE, Hans-Hermann, D-47198 Duisburg (DE)
(74) Vertreter: Knauf, Rudolf, Dipl.-Ing.
(86) Internationale Anmeldenummer: PCT/EP1998/007562
(87) Internationale Veröffentlichungsnummer: WO 1999/026745

(56) Entgegenhaltungen:
- DE-C- 3 315 376
- DE-C- 4 207 042
- DE-C- 19 541 615

## Beschreibung

Die Erfindung betrifft ein Kühlmittelzu- und -ableitungssystem für eine Drehdurchführung an einer endseitig mit Lagerzapfen in Lagerböcken drehgelagerten Stütz- und/oder Transportrolle mit einer mindestens einen der Lagerzapfen abdeckenden, von dem Lagerbock getragenen Abdeckplatte, an der Kühlmittelleitungen angeschlossen sind, und mit einer zwischen der Abdeckplatte und dem Lagerzapfen wirksamen Abdichtung, die eine relative Axial- und Drehbewegung zwischen der Abdeckplatte und dem Lagerzapfen erlaubt, und mit zentralen, axialen Leitungen für die Kühlmittelzu- beziehungsweise -abfuhr, die mit der Dichtung einen Ringkanal für die Kühlmittelabbeziehungsweise -zufuhr bildet.

Kühlmittelzu- und -ableitungssysteme dieser oder ähnlicher Art sind bekannt (DE 195 41 615 C1; DE 42 07 042 C1). Sie finden vor allem bei Transportrollen von Stranggießanlagen Verwendung.

Bei einem dieser bekannten Systeme, das auch in der Praxis eingesetzt wird, trägt die Abdeckplatte zwei Anschlüsse für flexible Panzerschläuche, über die das Kühlmittel zu- und abgeführt wird. Wegen des rauhen Betriebs, dem diese auch Verschraubungen und Dichtungen aufweisenden Anschlüsse und Panzerschläuche ausgesetzt sind, ist es üblich, nur Teile aus Edelstahl einzusetzen.

Der Aufwand an Material ist deshalb nicht unerheblich. Außerdem ist die Montage und Demontage zeitaufwendig. Schließlich gibt es auch Dichtungsprobleme an den Schraubverbindungen.

In Kenntnis dieser Probleme ist bei einem anderen bekannten System mit nur einem Kühlmittelanschluß an der Abdeckplatte vorgesehen, den Anschluß und die Zubeziehungsweise Ableitung des Kühlmittels in der Abdeckplatte und im Lagerblock als eingeformten Kanal auszubilden. Auch diese Art der Zu- beziehungsweise Ableitung des Kühlwassers ist aufwendig.

Der Erfindung liegt die Aufgabe zugrunde, ein Kühlmittelzu- und -ableitungssystem der eingangs genannten Art zu schaffen, das einen robusten Aufbau hat und mit wenig Zeitaufwand zu montieren und demontieren ist. Auch soll die Abdichtung unproblematisch sein.

Diese Aufgabe wird bei dem eingangs genannten Kühlmittelzu- und ableitungssystem dadurch gelöst, daß die Abdeckplatte einen Verteilerkopf mit Ein- und Auslässen für die zentralen, axialen Leitungen umfasst und in diesem Verteilerkopf als Anschlüsse für die als Standrohre ausgebildeten Kühlmittelleitungen zwei nebeneinander angeordnete Steckaufnahmen ausgebildet sind. Nach einer Ausgestaltung der Erfindung sollten die Standrohre mit ihren von der Abdeckplatte abgewandten Enden in stationären Steckaufnahmen von Zu- und Abfuhrkanälen für das Kühlmittel sitzen.

Bei dem erfindungsgemäßen System sind die an der Zuund Abfuhr des Kühlmittels beteiligten äußeren Bauteile steif ausgebildet und stehen zueinander in fester räumlicher Beziehung. Deshalb können die Zu- und Ableitungen als Rohre ausgebildet sein, die nur durch ihre Steckaufnahmen gehalten werden. Das erleichtert zum einen die Montage und Demontage und erlaubt zum anderen eine einfache, mechanisch nicht belastete Abdichtung mittels O-Ringen. Auch ist der Herstellungsaufwand eines solchen Systems im Vergleich zu einem System mit in der Abdeckplatte integrierten Kanälen gering, da die Mittel für die Zu- und Ableitung des Kühlmittels nicht in aufwendig herzustellenden Abdeckplatten und Lagerböcken integriert zu werden brauchen.

Um die Zu- und Abfuhrkanäle räumlich möglichst kompakt zu gestalten, gibt es nach der Erfindung mehrere Möglichkeiten.

Nach einer ersten Alternative sind die Standrohre in einer gemeinsamen, senkrecht zur Achse der Stütz- und/oder Transportrolle liegenden Vertikalebene angeordnet, während die Zu- und Abfuhrkanäle parallel nebeneinander in derselben Horizontalebene auf verschiedenen Seiten der Vertikalebene liegen, wobei jeder Kanal in der Vertikalebene mindestens ein Abzweigstück als stationäre Steckaufnahme für eines der Standrohre aufweist. Bei dieser Alternative werden gleich lange Standrohre und in derselben Ebene liegende Abzweigstücke eingesetzt, wodurch sich eine geringe Bauhöhe ergibt.

Nach einer zweiten Alternative ist vorgesehen, daß die Standrohre in einer gemeinsamen, senkrecht zur Achse der Stütz- und/oder Transportrolle liegenden Vertikalebene angeordnet sind und die Zu- und Abfuhrkanäle parallel übereinander in dieser Vertikalebene liegen, wobei der höher liegende Kanal mindestens ein in der Vertikalebene liegendes Abzweigstück als stationäre Steckaufnahme für eines der Standrohre aufweist und der tiefer liegende Kanal mit mindestens einer stationären Steckaufnahme in dieser Vertikalebene liegt. Diese Alternative hat den Vorteil, daß nur einer der beiden Kanäle Abzweigstücke benötigt und der andere tieferliegende Kanal bei einer Stranggießanlage mit einem Segmentrahmen in diesem Segmentrahmen ausgebildet sein kann. Allerdings müssen dafür eine größere Bauhöhe und verschieden lange Standrohre zur Verfügung gestellt werden.

Bei einer dritten Alternative, die bevorzugt ist, sind die Standrohre in verschiedenen in Richtung der Achse der Stütz- und/oder Transportrolle versetzten Vertikalebenen angeordnet und die Zu- und Abfuhrkanäle liegen parallel nebeneinander in derselben Horizontalebene und in diesen beiden Vertikalebenen, wobei in den Kanälen die stationären Steckaufnahmen für die Standrohre ausgebildet sind. Diese Alternative ist deshalb besonders vorteilhaft, weil sie mit gleich langen Standrohren auskommt und eine geringe Bauhöhe bei verhältnismäßig kleiner Baubreite in Richtung der Achse der Stützrolle hat.

Bei dieser dritten Alternative können die Zu- und Abfuhrkanäle dann besonders raumsparend untergebracht werden, wenn die Drehdurchführung bei einer Stranggießanlage mit einem kastenförmigen Segmentrahmen eingesetzt werden soll. In diesem Fall kann der Segmentrahmen mit einer eingebauten Trennwand die Zu- und Abfuhrkanäle bilden.

In der Regel steht für die Montage der Drehdurchführung am stirnseitigen Ende nicht viel Raum zur Verfügung. Gleichwohl läßt sich die Montage problemlos durchführen, wenn nach einer weiteren Ausgestaltung der Erfindung der im Bereich der zentralen Dichtung liegende Abschnitt der zentralen, axialen Leitung aus zwei lösbar zusammengesteckten Rohrstücken besteht, deren Steckverbindung im Bereich der äußeren Montageebene der Abdeckplatte für den Verteilerkopf liegt. In diesem Fall kann nämlich der Verteilerkopf zusammen mit dem äußeren Rohrstück ausgebaut werden, ohne daß es dafür notwendig ist, die gesamte zentrale axiale Leitung, die sich bis in den Bereich des Rollenmantels erstreckt, demontieren zu müssen.

Schließlich erleichtert es die Herstellung des Verteilerkopfes, wenn dieser eine zentrale Stufenbohrung aufweist, in der von den beiden Rohrstücken das am weitesten außen liegende unter Bildung einer zentralen zu der am weitesten außen liegenden Steckaufnahme führenden Leitung und einer zu der näheren Steckaufnahme führenden Ringleitung sitzt.

Mit weiteren Ausgestaltungen des Verteilerkopfes kann dessen Herstellung erleichtert werden. So ist nach einer Ausgestaltung vorgesehen, daß der Verteilerkopf eine zentrale Stufenbohrung aufweist, von der der kleinere Abschnitt gemeinsam mit den zusammengesetzten Rohrstücken eine zentrale Leitung bildet, während der größere Abschnitt, der die zusammengesetzten Rohrstücke umgibt, mit diesen Rohrstücken einen Ringkanal bildet. Die zentrale Leitung ist dann mit der am weitesten außen liegenden Steckaufnahme verbunden, während die Ringleitung mit der anderen Steckaufnahme verbunden ist. Vorzugsweise ist das äußere Rohrstück an seinem äußeren Ende mit einem Gewinde versehen, so daß es im Übergangsbereich der zentralen Stufenbohrung in ein entsprechendes Gegengewinde eingeschraubt werden kann. Diese Verschraubung dichtet die zentrale Leitung und die Ringleitung gegeneinander ab.

Im folgenden wird die Erfindung anhand einer drei Ausführungsbeispiele darstellenden Zeichnung näher erläutert. Im einzelnen zeigen:
- Figur 1: ein Kühlmittelzu- und -ableitungssystem an einer Drehdurchführung im Bereich des Lagerzapfens einer Stütz- und/oder Transportrolle einer Strangführung in einer Stranggießanlage im vertikalen Axialschnitt nach Linie C-C der Figur 2,
- Figur 2: einen Teil des Systems gemäß Figur 1 in Ansicht A der Figur 1,
- Figur 3: einen Teil des Systems gemäß Figur 1 im Schnitt nach der Linie B-B der Figur 2,
- Figur 4: eine zu Figur 1 bis 3 abgewandelte Ausführung im Axialschnitt nach Linie C-C der Figur 5,
- Figur 5: einen Teil des Systems gemäß Figur 4 in Ansicht A der Figur 4,
- Figur 6: einen Teil des Systems gemäß Figur 4 im Schnitt nach der Linie B-B der Figur 5,
und
- Figur 7: einen Verteilerkopf der Drehdurchführung mit Standrohren und Zu- und Abfuhrkanälen im Axialschnitt in einer zu den übrigen Figuren anderen Ausführung im vertikalen Axialschnitt.

Eine wassergekühlte Stütz-/Transportrolle 1 weist im äußeren Bereich axial verlaufende Kanäle 2 und darin einmündende beziehungsweise davon ausgehende und zu einem zentralen Verteilsystem führende Kanäle 3 auf. Das zentrale Verteilsystem besteht aus einer axialen mittigen Bohrung 4 in der Stütz-/Transportrolle 1 und einer darin angeordneten Rohrleitung 5, die einen zentralen Zuführungskanal 6 für Kühlmittel, insbesondere Kühlwasser, und einen Ringkanal 7 für die Abführung des Kühlwassers bildet. Die Rohrleitung 5 ist an der Stirnseite mit einem Kupplungsstück 8 versehen.

Die Stütz-/Transportrolle 1 trägt stirnseitig einen Lagerzapfen 9, der über ein Rollenlager 10 in einem Lagerbock 11 gelagert ist. Um das Kühlwasser zu der Stütz-/Transportrolle 1 zu leiten beziehungsweise von ihr abzuleiten, ist seitlich neben dem Lagerzapfen 9 eine stationäre Abdeckplatte 14 mit einem Verteilerkopf 12 vorgesehen, der mit einer drehfest gehaltenen zentralen Rohrleitung 13 an dem sich mit der Stützrolle drehenden Kupplungsstück angeschlossen ist, in dem sie im Kupplungsstück abgedichtet steckt.

Die an der Stirnseite des Lagerzapfens 9 angeordnete Abdeckplatte 14 ist an dem Lagerbock 11 befestigt. Sie weist eine zentrale Bohrung 14a auf, in der eine Führungsbüchse 15 mit einer O-Ringdichtung 15a abgedichtet durch den an der Abdeckplatte 14 abgeschraubten Verteilerkopf 12 gehalten ist. In dieser Führungsbüchse 15 sitzt axial verschieblich und abgedichtet durch eine Dichtung 15b eine Hülse 16a. Diese Hülse 16a ist an einem Ende eines drehsteifen, aber längenbeweglichen und biegeweichen Schlauches 16b angeschlossen, an dessen freiem Ende eine Hülse 16c angeschlossen ist, die mit Dichtungen 17a,17b abgedichtet in einem im Durchmesser vergrößerten Abschnitt 4a der mittigen Bohrung 4 sitzt. Diese Hülse 16c ist mit einem stirnseitigen Flansch 16d an der Stirnseite des Lagerzapfens 9 befestigt. Die Hülse 16a, der Schlauch 16b und die Hülse 16c bilden eine zwischen dem Lagerzapfen 9 und der Abdeckplatte 14 wirksame Abdichtung, die eine relative Axial- und Drehbewegung sowie Biegung zwischen dem Lagerzapfen 9 und der Abdeckplatte 14 erlaubt.

Der Verteilerkopf 12 weist einen Anschraubflansch 12a auf, der dicht an der Abdeckplatte 14 angeschraubt ist. Er weist nebeneinander zwei nach unten offene Steckaufnahmen 12b,12c auf, in denen entsprechend gestaltete Enden von zwei parallel nebeneinander angeordneten Standrohren 18a,18b mit O-Ringen abgedichtet sitzen. Die Standrohre 18a,18b sitzen ferner mit entsprechend gestalteten unteren Enden mit O-Ringen abgedichtet in stationär angeordneten Steckaufnahmen 19a, 19b von Sammelkanälen 20a,20b für die Zu- und Abfuhr des Kühlwassers. Dafür sind an den Sammelkanälen 20a,20b Abzweigstücke 21a,21b spiegelsymmetrisch angeordnet. An den Sammelkanälen 20a,20b sind weitere Standrohrpaare für andere Stützrollen angeschlossen.

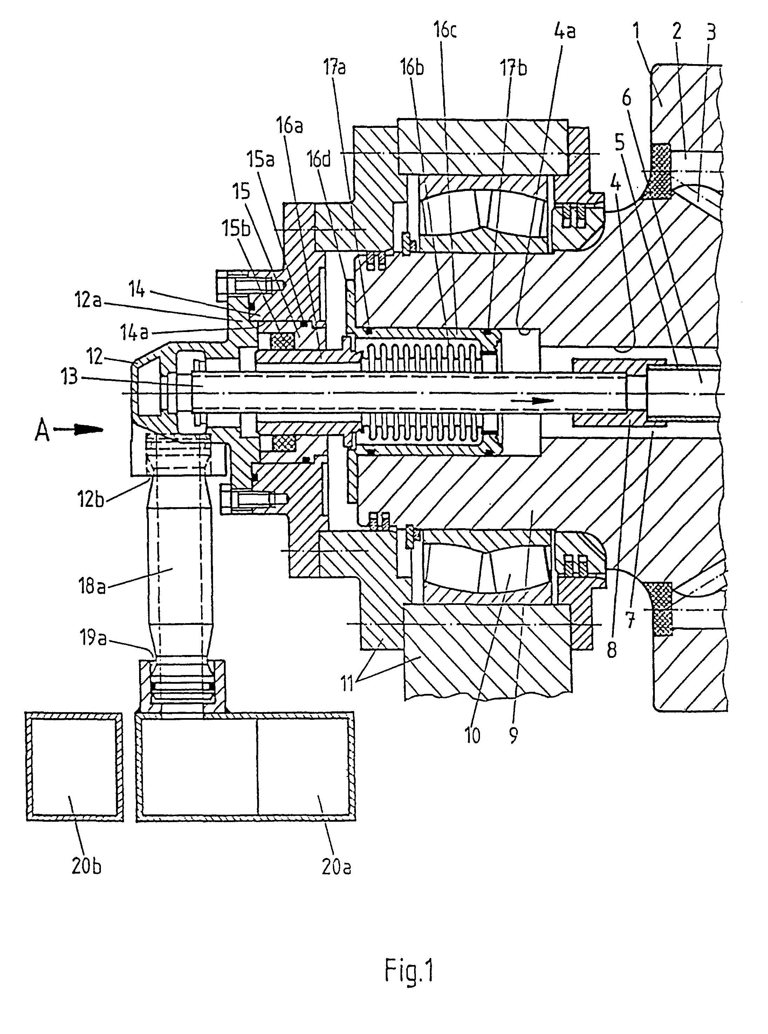

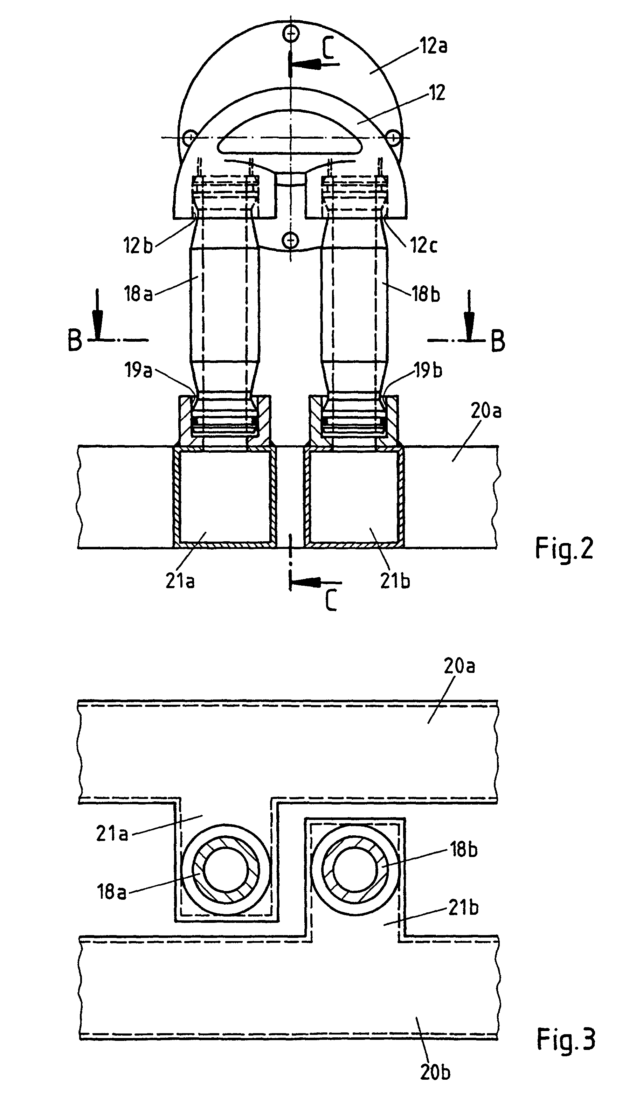

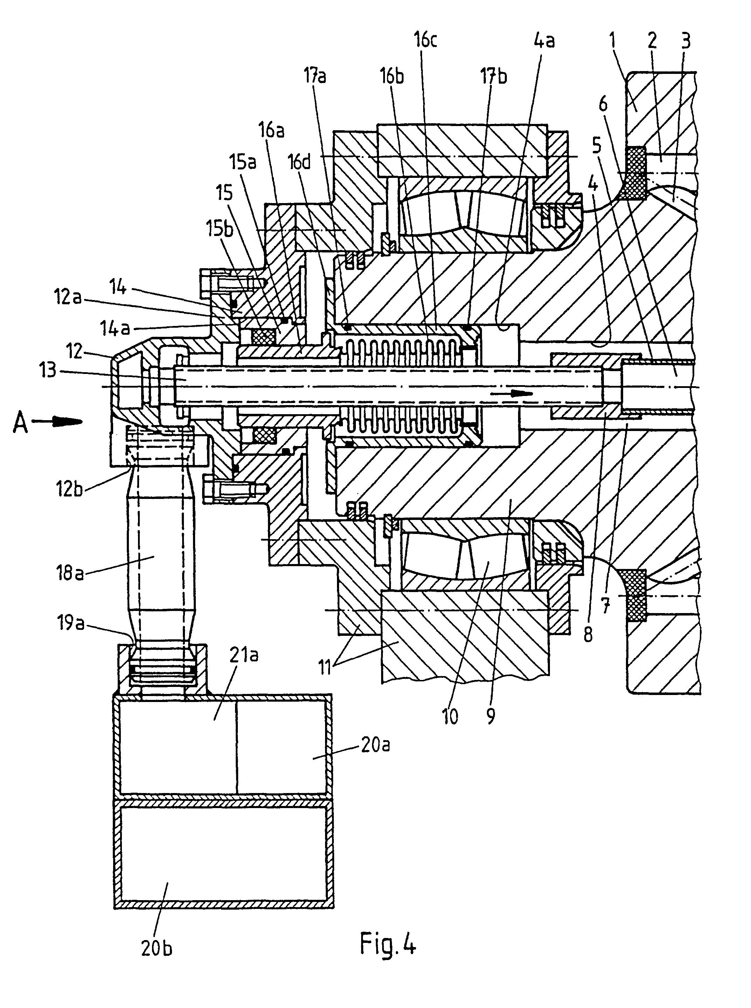

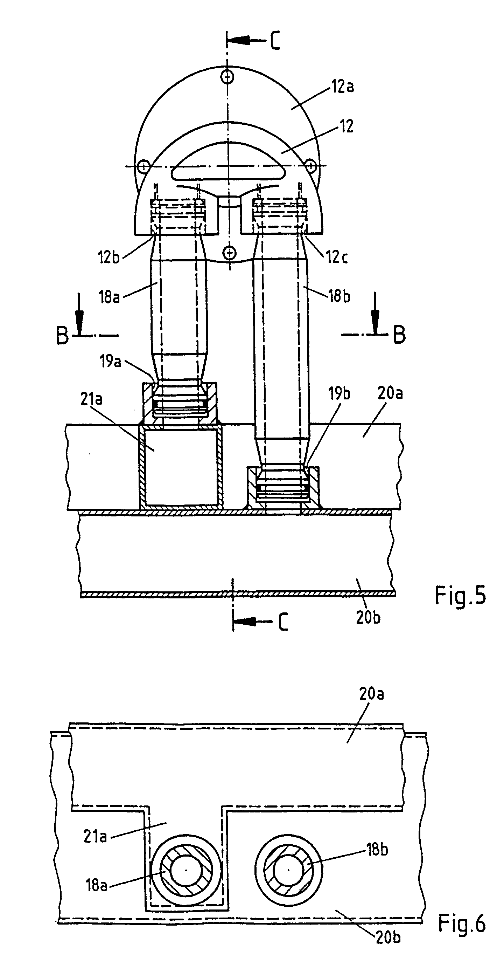

Das Ausführungsbeispiel der Figuren 4 bis 6 unterscheidet sich von dem der Figuren 1 bis 3 nur darin, daß eines der beiden Standrohre 18a,18b eine größere Länge hat und der Kanal 20b in einer tieferen Horizontalebene liegt und sich im wesentlichen über die gesamte Breite des Kanals 20a einschließlich der Abzweigung 21a erstreckt.

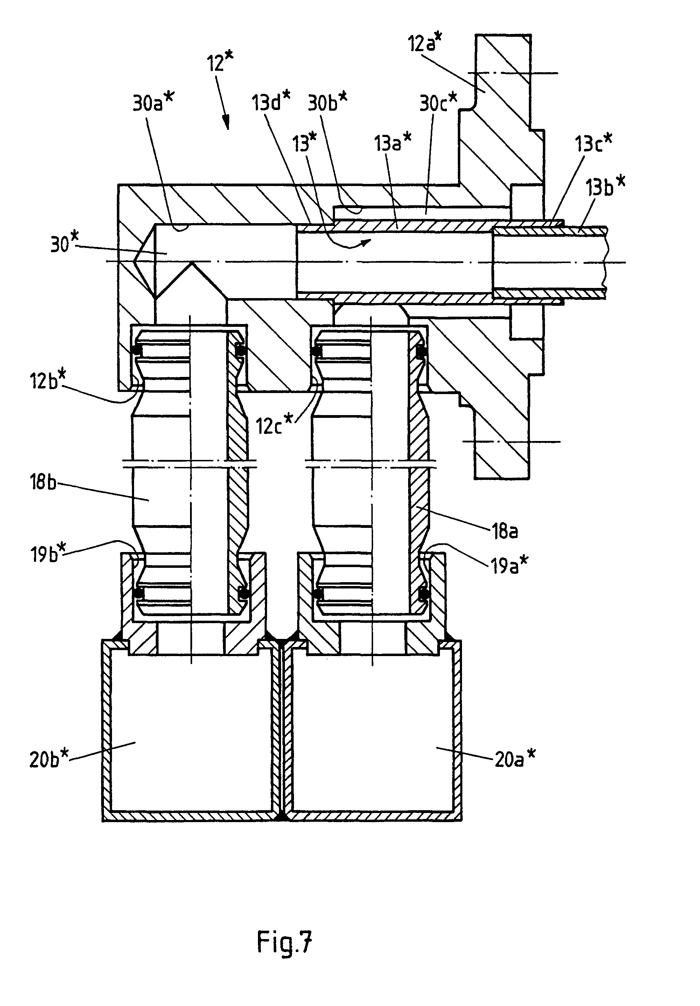

Das Ausführungsbeispiel der Figur 7 unterscheidet sich von den anderen Ausführungsbeispielen vor allem darin, daß die beiden Steckaufnahmen 12b*,12c* in Achsrichtung der Stützrolle 1 hintereinander liegen. Ein weiterer Unterschied besteht darin, daß die zentrale Rohrleitung 13* sich aus zwei zusammengesteckten Rohrleitungsstücken 13a*,13b* zusammensetzt. Die Steckverbindung 13c* liegt in der Montageebene des Anschraubflansches 12a* des Verteilerkopfes 12*, so daß bei der Montage des Verteilerkopfes 12* das äußere Rohrstück 13a* mit demontiert werden kann und es dadurch nicht zu Behinderungen bei der Montage und Demontage einer sonst sehr weit, und zwar fast bis in den Bereich des Mantels der Stütz-/Transportrolle 1 ragenden Rohrleitung kommt. Diese Art der Zweiteilung der Rohrleitung 13* läßt sich auch bei den übrigen Ausführungsbeispielen verwirklichen.

Im Verteilerkopf 12* ist eine zentrale Stufenbohrung 30* vorgesehen. Im vorderen im Durchmesser größeren Abschnitt 30b* sitzt das äußere Rohrstück 13a* und bildet mit der Bohrung einen Ringkanal 30c*, der zu der Steckaufnahme 12c* führt. Das Rohrstück 13a* geht über in den im Durchmesser kleineren Abschnitt 30a* der Stufenbohrung 30* und mündet hier in die weiter außen liegende Steckaufnahme 12b*. Der Abschnitt 30a* und der Ringkanal 30c* sind über ein Gewinde 13d* gegeneinander abgedichtet.

Bei diesem Ausführungsbeispiel sind zwei gleich lange Standrohre 18a,18b vorgesehen, die mit ihren unteren Enden in stationären Steckaufnahmen 19a*,19b* sitzen. Die Steckaufnahmen 19a*,19b* sind auf zwei kastenförmigen Zuund Abfuhrkanälen 20a*,20b* aufgebaut.

Dieses bevorzugte Ausführungsbeispiel hat gegenüber den anderen Ausführungsbeispielen den Vorteil, daß es sowohl mit gleich langen Standrohren 18a,18b als auch mit zwei einfach gestalteten Zu- und Abfuhrkanälen 20a*,20b* auskommt, die im Vergleich zu den Kanälen des Ausführungsbeispiels der Figuren 1 bis 6 weniger Bauraum erforderlich machen. Diese beiden Kanäle 20a*,20b* können auch in einem kastenförmigen Segmentrahmen ausgebildet sein, der bei Stranggießanlagen üblicherweise vorgesehen ist. In diesem Fall braucht in dem kastenförmigen Rahmen zur Trennung der beiden Kanäle nur eine Trennwand eingebaut zu sein.

## Patentansprüche

1. Kühlmittelzu- und -ableitungssysstem für eine Drehdurchführung an einer endseitig mit Lagerzapfen (9) in Lagerböcken (11) drehgelagerten Stütz- und/oder Transportrolle mit einer mindestens einen der Lagerzapfen (9) abdeckenden, von dem Lagerbock (11) getragenen Abdeckplatte (14), an der Kühlmittelleitungen angeschlossen sind, und mit einer zwischen der Abdeckplatte (14) und dem Lagerzapfen (9) wirksamen Abdichtung (16a,16b,16c,16d), die eine relative Axial- und Drehbewegung zwischen der Abdeckplatte (14) und dem Lagerzapfen (9) erlaubt, und mit zentralen, axialen Leitungen (6,7,13) für die Kühlmittelzu- beziehungsweise -abfuhr, die mit der Dichtung (16a,16b,16c,16d) einen Ringkanal für die Kühlmittelab- beziehungsweise -zufuhr, die mit der Dichtung (16a,16b,16c,16d) einen Ringkanal für die Kühlmittelab- beziehungsweise -zufuhr bildet,
**dadurch gekennzeichnet, daß**
die Abdeckplatte (14) einen Verteilerkopf (12, 12*) mit Ein- und Auslässen für die zentralen, axialen Leitungen (6, 7, 13, 13*) umfaßt und in diesem Verteilerkopf (12, 12*) als Anschlüsse für die als Standrohre (18a, 18b) ausgebildeten Kühlmittelleitungen zwei nebeneinander angeordnete Steckaufnahmen (12b, 12c, 12b*, 12c*) ausgebildet sind.

2. Kühlmittelzu- und -ableitungssystem nach Anspruch 1 ,
**dadurch gekennzeichnet, daß** die Standrohre (18a,18b) mit ihren von der Abdeckplatte (14) abgewandten Enden in stationären Steckaufnahmen (19a,19b, 19a*,19b*) von Zu- und Abfuhrkanälen (20a,20b,20a*,20b*) für das Kühlmittel sitzen.

3. Kühlmittelzu- und -ableitungssystem nach Anspruch 2,
**dadurch gekennzeichnet, daß** die Standrohre (18a,18b) in einer gemeinsamen, senkrecht zur Achse der Stütz- und/oder Transportrolle (1) liegenden Vertikalebene angeordnet sind und die Zu- und Abfuhrkanäle (20a,20b) parallel nebeneinander in derselben Horizontalebene auf verschiedenen Seiten der Vertikalebene liegen, wobei jeder Kanal (20a,20b) in der Vertikalebene mindestens ein Abzweigstück (21a,21b) als stationäre Steckaufnahme für eines der Standrohre (18a,18b) aufweist (Fig. 1-3).

4. Kühlmittelzu- und -ableitungssystem nach Anspruch 2,
**dadurch gekennzeichnet, daß** die Standrohre (18a,18b) in einer gemeinsamen, senkrecht zur Achse der Stütz- und/oder Transportrolle (1) liegenden Vertikalebene angeordnet sind und die Zu- und Abfuhrkanäle (20a,20b) parallel übereinander in dieser Vertikalebene liegen, wobei der höher liegende Kanal (20a,20b) mindestens ein in dieser Vertikalebene liegendes Abzweigstück (21a,21b) als stationäre Steckaufnahme für eines der Standrohre (18a,18b) aufweist und der tiefer liegende Kanal mit mindestens einer stationären Steckaufnahme in dieser Vertikalebene liegt (Fig. 4-6).

5. Kühlmittelzu- und -ableitungssystem nach Anspruch 2,
**dadurch gekennzeichnet, daß** die Standrohre (18a,18b) in verschiedenen, in Richtung der Achse der Stütz- und/oder Transportrolle (1) versetzten Vertikalebenen angeordnet sind und die Zu- und Abfuhrkanäle (20a*,20b*) parallel nebeneinander in derselben Horizontalebene und in diesen beiden Vertikalebenen liegen, wobei in den Kanälen (20a*,20b*) die stationären Steckaufnahmen für die Standrohre (18a,18b) ausgebildet sind.

6. Kühlmittelzu- und -ableitungssystem nach Anspruch 5,
**dadurch gekennzeichnet, daß** bei einer Stranggießanlage mit einem kastenförmigen Segmentrahmen die Zu- und Abfuhrkanäle im Segmentrahmen ausgebildet und durch eine eingebaute Trennwand voneinander getrennt sind.

7. Kühlmittelzu- und -ableitungssystem nach Anspruch 1,
**dadurch gekennzeichnet, daß** der im Bereich der Dichtung liegende Abschnitt der zentralen, axialen Leitung (13*) aus zwei lösbar zusammengesteckten Rohrstücken (13a*,13b*) besteht, deren Steckverbindung (13c*) im Bereich der äußeren Montageebene der Abdeckplatte (14) für den Verteilerkopf (12*) liegt.

8. Kühlmittelzu- und -ableitungssystem nach Anspruch 1 und 7,
**dadurch gekennzeichnet, daß** der Verteilerkopf (12*) mit seinen axial versetzten Steckaufnahmen (12b*,12c*) eine zentrale Stufenbohrung (30*) aufweist, in der von den beiden Rohrstücken (13a*,13b*) das am weitesten außen liegende unter Bildung einer zentralen zu der am weitesten außen liegenden Steckaufnahme (12b*) führenden Leitung und einer zu der näheren Steckaufnahme (12c*) führenden Ringleitung (30c*) sitzt.

## Claims

1. A cooling medium supply and removal system for a rotary leadthrough for a support and/or transport roller supported rotationally at its end with bearing pins (9) in bearing blocks (11), with a cover plate (14) covering at least one of the bearing pins (9) and supported on the bearing block (11), to which cooling medium lines are connected, and with a seal (16a, 16b, 16c, 16d) acting between the cover plate (14) and the bearing pin (9) which allows a relative axial and rotational movement between the cover plate (14) and the bearing pin (9), and with central axial lines (6, 7, 13) for the cooling medium supply or removal, which form together with the seal (16a, 16b, 16c, 16d) an annular channel for the cooling medium supply or removal, **characterized in that** the cover plate (14) comprises a distributor head (12, 12*) with inlets and outlets for the central axial lines (6, 7, 13, 13*) and that two adjacently arranged plug-in receptacles (12b, 12c, 12b*, 12c*) as connectors for the cooling medium lines formed as standpipes (18a, 18b) are formed in this distributor head (12, 12*).

2. The cooling medium supply and removal system according to claim 1, **characterized in that** the standpipes (18a, 18b) with their ends facing away from the cover plate (14) are seated in stationary plug-in receptacles (19a, 19b, 19a*, 19b*) of supply and removal channels (20a, 20b, 20a*, 20b*) for the cooling medium.

3. The cooling medium supply and removal system according to claim 2, **characterized in that** the standpipes (18a, 18b) are arranged in a common vertical plane positioned perpendicularly to the axis of the support and/or transport roller (1) and the supply and removal channels (20a, 20b) are positioned parallel adjacent to one another in the same horizontal plane on different sides of the vertical plane, wherein each channel (20a, 20b) has at least one branch piece (21a, 21b) in the vertical plane as a stationary plug-in receptacle for one of the standpipes (18a, 18b) (Figs. 1-3).

4. The cooling medium supply and removal system according to claim 2, **characterized in that** the standpipes (18a, 18b) are arranged in a common vertical plane positioned perpendicularly to the axis of the support and/or transport roller (1) and the supply and removal channels (20a, 20b) are positioned parallel atop one another in this vertical plane, wherein the higher positioned channel (20a, 20b) has at least one branch piece (21a, 21b) positioned in this vertical plane as a stationary plug-in receptacle for one of the standpipes (18a, 18b) and the lower positioned channel is positioned with at least one stationary plug-in receptacle in this vertical plane (Figs. 4-6).

5. The cooling medium supply and removal system according to claim 2, **characterized in that** the standpipes (18a, 18b) are positioned in different vertical planes which are staggered in the direction of the axis of the support and/or transport roller (1) and the supply and removal channels (20a*, 20b*) are positioned parallel adjacent to one another in the same horizontal plane and in these two vertical planes, wherein the stationary plug-in receptacles for the standpipes (18a, 18b) are formed in the channels (20a*, 20b*).

6. The cooling medium supply and removal system according to claim 5, **characterized in that** for a continuous casting plant with a box-shaped segment frame the supply and removal channels are formed in the segment frame and are separated from one another by an installed partition.

7. The cooling medium supply and removal system according to claim 1, **characterized in that** the portion of the central axial line (13*) positioned in the area of the seal is comprised of two detachably inserted pipe sections (13a*, 13b*) whose plug connection (13c*) is positioned in the area of the outer mounting plane of the cover plate (14) for the distributor head (12*).

8. The cooling medium supply and removal system according to claim 1 and 7, **characterized in that** the distributor head (12*) with its axially staggered plug-in receptacles (12b*, 12c*) has a central stepped bore (30*) in which the outermost positioned one of the two pipe sections (13a*, 13b*) is seated under formation of a central line extending to the outermost positioned plug-in receptacle (12b*) and of an annular line (30c*) extending to the closer plug-in receptacle (12c*).

## Revendications

1. Système d'amenée et d'évacuation d'un milieu de refroidissement pour une traversée rotative au niveau d'un rouleau d'appui et/ou de transport, monté de manière à pouvoir tourner, au niveau de ses extrémités, par des tourillons (9) dans des blocs de paliers (11), comportant une plaque de recouvrement (14), qui recouvre au moins l'un des tourillons (9) et est portée par le bloc de palier (11) et à laquelle sont raccordées des canalisations du milieu de refroidissement, et comportant une garniture d'étanchéité (16a, 16b, 16c, 16d) active entre la plaque de recouvrement (14) et le tourillon (9) et qui permet un déplacement axial et de rotation relatif entre la plaque de recouvrement (14) et le tourillon (9), et comportant des canalisations axiales centrales (6, 7, 13) pour l'amenée ou l'évacuation du milieu de refroidissement et qui forment avec la garniture d'étanchéité un canal annulaire pour l'évacuation et l'amenée du milieu de refroidissement, **caractérisé en ce que** la plaque de recouvrement (14) comprend une tête de distribution (12, 12*) comportant des entrées et des sorties pour les canalisations axiales centrales (6, 7, 13, 13*) et que dans cette tête de distribution (12, 12*) deux logements d'enfichage (12, 12c, 12b*, 12c*), disposés côte-à-côte, sont formés en tant que raccords pour les canalisations du milieu de refroidissement agencées sous la forme de tubes verticaux (18a, 18b).

2. Système d'amenée et d'évacuation d'un milieu de refroidissement selon la revendication 1, **caractérisé en ce que** les tubes verticaux (18a, 18b) prennent appui, par leurs extrémités tournées à l'opposé de la plaque de recouvrement (14), dans des logements à enfichage fixes (19a, 19b, 19a*, 19b*) de canaux d'amenée et d'évacuation (20a, 20b, 20a*, 20b*) pour le milieu de refroidissement.

3. Système d'amenée et d'évacuation d'un milieu de refroidissement selon la revendication 2, **caractérisé en ce que** les tubes verticaux (18a, 18b) sont disposés dans un plan vertical commun, qui est perpendiculaire à l'axe du rouleau d'appui et/ou de transport (1) et les canaux d'amenée et d'évacuation (20a, 20b) sont disposés parallèlement côte-à-côte dans le même plan horizontal sur différents côtés du plan vertical, chaque canal (20a, 20b) comportant dans le plan vertical, un élément de dérivation (21a, 21b) en tant que logement à enfichage, fixes pour l'un des tubes verticaux (18a, 18b) (figures 1-3).

4. Système d'amenée et d'évacuation pour un milieu de refroidissement selon la revendication 2, **caractérisé en ce que** les tubes verticaux (18a, 18b) sont disposés dans un plan vertical commun, qui est perpendiculaire à l'axe du rouleau d'appui et/ou de transport (1) et que les canaux d'amenée et d'évacuation (20a, 20b) sont superposés en parallèle dans ce plan vertical, le canal (20a, 20b) le plus élevé comportant au moins un élément de dérivation (21a, 21b), qui est situé dans ce plan vertical, en tant que logement fixe à enfichage pour l'un des tubes verticaux (18a, 18b), et le canal le plus profond comportant au moins un logement à enfichage, fixe et situé dans ce plan vertical (figures 4-6)

5. Système d'amenée et d'évacuation pour un milieu de refroidissement selon la revendication 2, **caractérisé en ce que** les tubes verticaux (18a, 18b) sont disposés dans différents plans verticaux, qui sont décalés en direction de l'axe du rouleau d'appui et/ou de transport (1) et les canaux d'amenée et d'évacuation (20a*, 20b*) sont disposés parallèlement entre eux dans le même plan horizontal et dans ces deux plans verticaux, auquel cas les logements à enfichage fixes pour les tubes verticaux (18a, 18b) sont réalisés dans les canaux (20a*, 20b*).

6. Système d'amenée et d'évacuation pour un milieu de refroidissement selon la revendication 5, **caractérisé en ce que** dans le cas d'une installation de coulée continue comportant un cadre de segment en forme de boîte, les canaux d'amenée et d'évacuation sont formés dans le cadre du segment et sont séparés les uns des autres par une paroi de séparation intégrés.

7. Système d'amenée et d'évacuation pour un milieu de refroidissement selon la revendication 1, **caractérisé en ce que** la section, qui est située dans la zone de la garniture d'étanchéité, de la canalisation axiale centrale (13*) est constituée de deux éléments de tube (13a*, 13b*) emboîtés l'un dans l'autre de façon libérable et dont la liaison à enfichage (13c) est située dans la zone du plan extérieur de montage de la plaque de recouvrement (14) pour la tête de distribution (12*).

8. Système d'amenée et d'évacuation pour un milieu de refroidissement selon les revendications 1 et 7, **caractérisé en ce que** la tête de distribution (12*) pourvue de ses logements à enfichage (12b*, 12c*) décalés axialement comporte un perçage central étagé (30*), dans lequel est situé, parmi les deux éléments de tube (13a*, 13b*), celui qui est le plus éloigné à l'extérieur, en formant une canalisation centrale qui aboutit au logement à enfichage (12b*) qui est situé le plus à l'extérieur, et une canalisation annulaire (30c*) qui aboutit au logement à enfichage plus proche (12c*).
